Europäisches Patentamt

European Patent Office

Office européen des brevets

(11) Publication number: **0 109 724**
**B1**

# EUROPEAN PATENT SPECIFICATION

(45) Date of publication of patent specification: **10.06.87**

(21) Application number: **83201657.0**

(22) Date of filing: **22.11.83**

(51) Int. Cl.⁴: **A 01 B 13/02,** A 01 B 39/14,
A 01 B 33/16

(54) Soil working machine comprising a rotary digging and desintegrating tool and an upearthing device.

(30) Priority: **24.11.82 NL 8204577**

(43) Date of publication of application:
**30.05.84 Bulletin 84/22**

(45) Publication of the grant of the patent:
**10.06.87 Bulletin 87/24**

(84) Designated Contracting States:
**FR GB**

(56) References cited:
**FR-A-1 434 031**
**FR-A-2 392 585**
**FR-A-2 429 546**
**US-A-2 096 766**
**US-A-3 557 883**

(73) Proprietor: **Adriaansen, Johannes Martinus**
**Josephus**
**Molenstraat 51**
**NL-4756 BB Kruisland (NL)**

(72) Inventor: **Adriaansen, Johannes Martinus**
**Josephus**
**Molenstraat 51**
**NL-4756 BB Kruisland (NL)**

(74) Representative: **Boelsma, Gerben Harm, Ir.**
**Octrooibureau Polak & Charlouis Laan Copes**
**van Cattenburch 80**
**NL-2585 GD Den Haag (NL)**

Courier Press, Leamington Spa, England.

## Description

This invention relates to a soil working machine comprising a digging and disintegrating tool mounted for rotation about a horizontal axis and extending transversely to the direction of movement of the machine, and at least one upearthing member disposed behind said tool, said member having a triangular horizontal cross-sectional shape with a pair of guide faces extending laterally and rearwardly at an oblique angle from a forward edge disposed in a vertical plane through the direction of movement and extending downwardly to the working depth of the tool, said guide faces having lower edges which extend from the lower end of said forward edge upwards at an oblique angle.

Such a device is known from Dutch patent specification 168.683.

With this soil working machine the digging and disintegrating tool operates to disintegrate soil at the bottom of the furrows between the soil ridges to be moulded and to throw said disintegrated soil rearwardly up to the upearthing member. The latter member divides the soil mass thus thrown up into two portions, whereby the guide faces shove the soil up to opposite sides to form the ridges, the slopes of which being determined by the lower edges of said faces.

In the well-known machine the said forward edge has a forwardly inclining position — as seen in the direction of movement of the machine — due to which the guide faces will exert a downwardly directed force on the soil while shoving it forwardly and laterally.

In general rather solid ridges may be moulded by means of this well-known device.

The invention aims at improving this well-known machine in the sense that the upearthing member will be capable of moulding uniform and solid ridges from various kinds of soil, in particular light and heavy soils.

According to the invention this aim is achieved in that the guide faces are bent along a bending line at distance above the lower edges, the horizontal cross-section through the portions of the guide faces between said bending lines and said lower edges extending outwardly and rearwardly at a very slight angle with respect to the direction of movement of the machine.

In this way strips have been created at the lower edges of the guide faces, which have a slight clearance angle with respect to the sides of the ridges being moulded. It has been found that these strips have a compressing and smoothing effect on the rough ridges which are premoulded by the other portions of the guide faces of the upearthing member. It has been found also that there is no need anymore for the forward edge of the upearthing member to take a forwardly inclining position. Without affecting the compactness of the moulded ridges, said edge may take a vertical or even rearwardly inclining position as well.

The invention will be hereinafter further explained by way of example with reference to the accompanying drawings, in which:

Fig. 1 is a vertical cross-sectional view of a soil working machine according to the invention, along the direction of movement of the machine;

Fig. 2 shows a perspective view of an upearthing device according to the invention, comprising a plurality of upearthing members and

Fig. 3 is a horizontal cross-sectional view of an upearthing member according to the line III—III of Fig. 1.

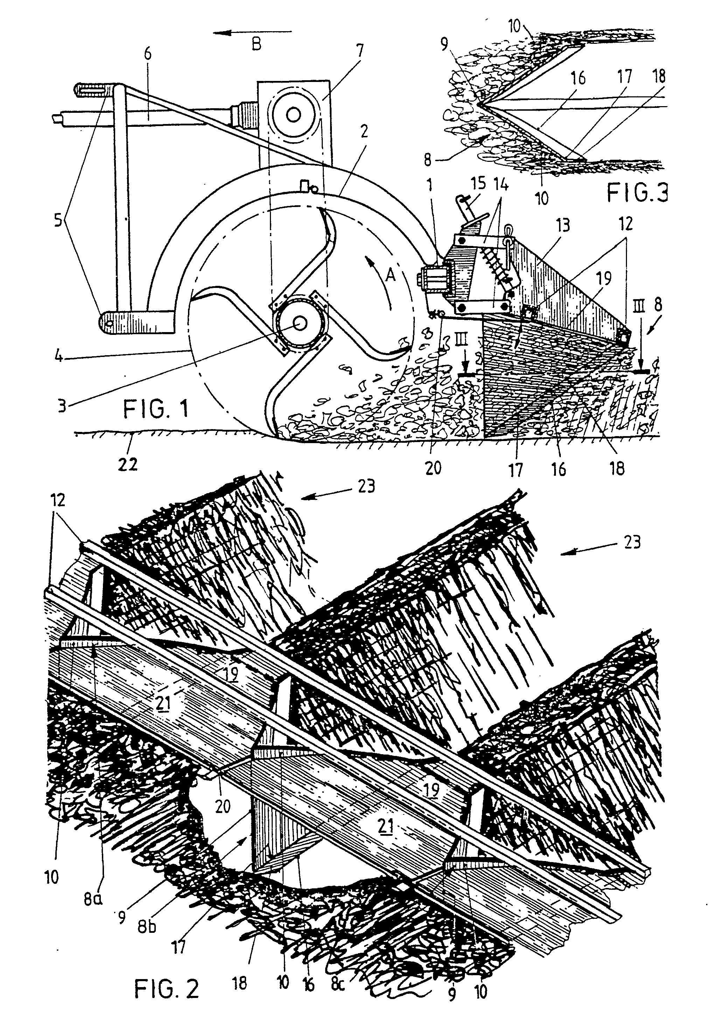

The soil working machine shown in Fig. 1 has a frame with a rear frame beam 1, a housing 2 with a digging and disintegrating tool 4 mounted therein for rotation about a horizontal axis 3 and a connecting device 5 for connection to a tractor. 6 designates a driving shaft to be connected to the branch shaft of the tractor (not shown). By means of said drive shaft the tool 3 may be rotated according to the arrow A via a gear. The direction of movement of the machine is indicated by the arrow B.

So far the machine may be considered to be of a well-known construction.

The upearthing device 8, embodying the invention, comprises a plurality of upearthing members 8a, 8b and 8c, disposed side by side (vide Fig. 2). Each of said upearthing members 8a—8c has a triangular shape, as seen in a horizontal cross-section, and comprises two faces 10 extending from a substantially vertically edge 9 both laterally and rearwardly, which faces enclose an angle of e.g. 60—70 degrees.

As shown in Fig. 1, the edges 9 of the upearthing device 8 extend downwardly to the working depth of the tool 4. The upearthing members 8a—8c are attached to a pair of connecting beams 12 at a mutual distance which corresponds with the spacing between the ridges 23 to be moulded. Mounting plates 13 are connected to the connecting beams 12, (one of which is shown in Fig. 1). By means of said mounting plates 13 the upearthing device 8 is suspended to the rear frame beam 8 via a parallelogram linkage 14 comprising a adjusting device 15.

The lower edges 16 of the faces 10 extend from a point adjacent the lower end of the forward edge 9 obliquely rearwardly to a point at the side of the rear beam 12.

Each face 10 shows, at a certain distance parallel to the lower edge 16, a bending line 17, from which said face continues towards the lower edge 16 at a very slight angle with respect to the direction of movement B, e.g. at an angle of a few degrees only.

In this way strips 18 have been created along the lower edges of each upearthing member 8a—8c, which are disposed substantially in the planes of the slopes of the ridges to be moulded.

As shown in Fig. 1 and 2, the spaces between the upearthing members 8a—8c are covered at the upper side — at the level of the connecting beams 12 — by means of fixed cover plates 19 and by means of plates 21 which are mounted for a pivoting movement about an axis 20.

The device described hereinabove operates as follows.

When the device is moved according to the arrow B soil will be dug and disintegrated in front of each upearthing member 8a—8c by the respective series of teeth of the tool 4 from the unworked bottom 22 and subsequently thrown rearwardly up to the respective upearthing member. The disintegrated soil thus thrown up will be caught at the upper side by means of the plates 21 and will then be divided by the upearthing member 8a—8c, whereby the faces 10 of the upearthing member will shove said soil to opposite sides so as to mould it to ridges.

During the last phase of the soil shoving action of the faces 10, the stips 18 become effective. During this last phase a compression and smoothing of the premoulded rough soil ridges will take place.

## Claims

1. A soil working machine comprising a digging and disintegrating tool (4) mounted for rotation about a horizontal axis (3) and extending transversely to the direction of movement of the machine, and at least one upearthing member (8) disposed behind said tool, said member having a triangular horizontal cross-sectional shape with a pair of guide faces (10) extending laterally and rearwardly at an oblique angle from a forward edge (9) disposed in a vertical plane through the direction of movement and extending downwardly to the working depth of the tool, said guide faces (10) having lower edges (16) which extend from the lower end of said forward edge (9) upwards at an oblique angle, characterized in that the guide faces are bent along a bending line (17) at a distance above the lower edges (16), the horizontal cross-section through the portions (18) of the guide faces (10) between said bending lines (17) and said lower edges extending outwardly and rearwardly at a very slight angle with respect to the direction of movement of the machine.

2. A soil working machine according to claim 1, characterized in that the bending line (17) extends parallel to the lower edge (16).

3. A soil working machine according to claims 1—2, characterized in that the guide faces (10) starting from said forward edge (9), are initially enclosing an angle of 60—70 degrees, while the face portions (18) extending from said bending line (17) enclose an angle of only a few degrees with the direction of movement of the machine.

4. An upearthing device adapted to be mounted at the rear of a rotary soil working machine, comprising a plurality of upearthing members (8) disposed side by side, transversely to the direction of movement of the machine, each member (8) having a triangular horizontal cross-sectional shape with a pair of guide faces (10) extending laterally and rearwardly at an oblique angle from a forward edge (9) disposed in a vertical plane through the direction of movement and adapted to extend downwardly to the working depth of the machine, said guide faces (10) having lower edges (16) extending from the lower end of said forward edge (9) upwards at an oblique angle, characterized in that said guide faces (8) are bent along a bending line (17) at a distance above said lower edges (16), the horizontal cross-section through the portions (18) of the guide faces (10) between said bending lines (17) and said lower edges extending outwardly and rearwardly at a very slight angle with respect to the direction of movement of the machine.

## Patentansprüche

1. Bodenbearbeitungsmaschine mit einem um eine sich quer zur Laufrichtung der Maschine erstreckende waagerechte Achse (3) rotierenden, den Boden ausgrabenden und zerkrümmelnden Gerät (4) und mindestens einem, hinter letzterem angeordneten Häufelorgan (8), welches Organ eine im Horizontalschnitt dreieckige Gestalt mit einem Paar Führungsflächen (10) aufweist, welche Führungsflächen sich seitlich und rückwärts unter einem schiefen Winkel von einer Vorderkante (9) erstrecken, die in einer Vertikalebene durch die Laufrichtung der Maschine angeordnet ist und sich nach unten bis auf die Bearbeitungtiefe des Geräts erstreckt, welche Führungsflächen (10) untere Ränder (16) aufweisen, welche sich vom unteren Ende der Vorderkante (9) mit einem schiefen Winkel aufwärts erstrecken, dadurch gekennzeichnet dass die Führungsflächen um eine Biegungslinie (17) gebogen sind, welche sich in einem Abstand oberhalb der unteren Ränder (16) erstreckt, während der Horizontalschnitt durch die Teile (18) der Führungsflächen (10) zwischen den Biegungslinien (17) und den unteren Rändern sich nach aussen und nach hinten unter einem sehr geringen Winkel gegenüber der Laufrichtung der Maschine erstreckt.

2. Bodenbearbeitungsmaschine nach Anspruch 1, dadurch gekennzeichnet dass die Biegungslinie (17) sich parallel zum unteren Rand (16) erstreckt.

3. Bodenbearbeitungsmaschine nach den Ansprüchen 1, 2, dadurch gekennzeichnet dass die Führungsflächen (10), ausgehend von der Vorderkante (9), anfänglich einen Winkel von 60—70 Grad einschliessen, während die Flächenteile (18), welche sich von der Biegungslinie (17) erstrecken, einen Winkel von nur wenig Grad mit der Laufrichtung der Maschine einschliessen.

4. Häufelvorrichtung geeignet für Anordnung am hinteren Ende einer rotierenden Bodenbearbeitungsmaschine, welche Vorrichtung eine Anzahl von nebeneinander und quer zur Laufrichtung der Maschine angeordneten Häufelorganen (8) aufweist, von welchen jedes Organ (8) eine im Horizontalschnitt dreieckige Gestalt mit einem Paar Führungsflächen (10) aufweist, welche Führungsflächen sich seitlich und rückwärts unter einem schiefen Winkel von einer Vorderkante (9) erstrecken, die in einer Vertikalebene durch die Laufrichtung angeordnet ist und dazu angeordnet ist sich nach unten bis auf die Bearbeitungstiefe der Maschine zu erstrecken, welche Führungsflächen (10) untere Ränder (16) aufweisen, welche sich vom unteren Ende der Vorderkante (9) unter einem schiefen Winkel aufwärts erstrecken, dadurch gekennzeichnet dass die Führungsflächen (8) um eine sich in einem Abstand oberhalb der unteren Ränder (16) befindenden Biegungslinie (17) gebogen sind, während der Horizontalschnitt durch die Teile (18) der Führungsflächen (10) zwischen der Biegungslinien (17) und den unteren Rändern sich nach aussen und nach hinten unter einem sehr geringen Winkel in Bezug auf die Laufrichtung der Maschine erstreckt.

**Revendications**

1. Machine pour travailler le sol, comprenant un outil (4) pour l'excavation et le désintégrage du sol, monté pour rotation autour d'un arbre (3) horizontal, et s'étendant transversalement par rapport à la direction de mouvement de la machine, et au moins un moyen (8) de remontée disposé à l'arrière de l'outil, ledit élément ayant une section transversale horizontale de forme triangulaire avec une paire de surfaces (10) de guidage s'étendant latéralement et en arrière d'un angle oblique depuis une arête avant (9) située dans un plan vertical contenant la direction de mouvement et s'étendant en bas jusqu'à la profondeur de travail de l'outil, ledites surfaces (10) de guidage ayant des bords (16) inférieurs, s'étendant depuis l'extrémité inférieure de ladite arête (9) avant en haut selon un angle oblique, caractérisée en ce que les surfaces de guidage ont été pliées selon une ligne (17) de pliage située espacée au-dessus des bords (16) inférieurs, la section horizontale par les parties (18) des surfaces (10) de guidage entre lesdites lignes (17) de pliage et les bords inférieurs s'étendant en dehors et en arrière par un angle très petite par rapport à la direction de mouvement de la machine.

2. Machine pour travailler le sol selon la revendication 1, caractérisée en ce que la ligne (17) de pliage s'étend en parallel au bord (16) inférieur.

3. Machine pour travailler le sol selon les revendications 1, 2, caractérisée en ce que les surfaces (10) de guidage, en départ de ladite arête (9) avant, initialement impliquenet un angle de 60—70 degrés, tandis que les parties (18) des surfaces s'étendant en départ de la ligne (17) de pliage impliquenent un angle de seulement peu de degrés avec la direction de mouvement de la machine.

4. Dispositif de remontée propre a être monté à l'arrière d'une machine rotative pour travailler de sol, comprenant un nombre d'éléments (8) de remontée, disposés côte à côte, transversalement à la direction de mouvement de la machine, chaque élément (8) ayant une section transversale horizontale de forme triangulaire avec une paire de surfaces (10) de guidage s'étendant latéralement et en arrière d'un angle oblique depuis une arête avant (9) située dans un plan vertical contenant la direction de mouvement et s'étendant en bas jusqu'à la profoneur de travail de l'outil, lesdites surfaces (10) de guidage ayant des bords (16) inférieurs, s'étendant depuis l'extrémité inférieure de ladite arête (9) avant en haut selon un angle oblqiue, caractérisée en ce que les surfaces de guidage ont été pliées selon une ligne (17) de pliage située espacée au-dessus des bords (16) inférieurs, la section horizontale par les parties (18) des surfaces (10) de guidage entre lesdites lignes (17) de pliage et les bords inférieurs d'étendant en dehors et en arrière par un angle très petite par rapport à la direction de mouvement de la machine.

FIG. 1

FIG.3

FIG. 2